# EUROPÄISCHE PATENTANMELDUNG

(11) **EP 0 719 027 A2**
(43) Veröffentlichungstag der Anmeldung: **26.06.1996**
(21) Anmeldenummer: 95203455.1
(22) Anmeldetag: 12.12.1995
(51) Int. Cl.: H04M 9/08

(54) **Verfahren und Anordnung zur Echokompensation**

(30) Priorität: 22.12.1994 DE 4445877
(71) Anmelder: Philips Patentverwaltung GmbH, 22335 Hamburg (DE); Philips Electronics N.V., 5621 BA Eindhoven (NL)
(72) Erfinder: Armbrüster, Werner, Röntgenstrasse 24, D-22335 Hamburg (DE)
(74) Vertreter: Poddig, Dieter, Dipl.-Ing.

(57) **Zusammenfassung**

Zur Echounterdrückung bei einer Vollduplex-Verbindung wird üblicherweise ein adaptives Filter (34) eingesetzt, das aus dem Mikrofonsignal über eine Kombinieranordnung bzw. Differenzanordnung denjenigen Anteil unterdrückt, der über den akustischen Echopfad vom Mikrofon aufgenommen wird. Für eine gute Funktion des adaptiven Filters sollten die Pegel der Signale auf der Eingangsleitung (10) und am Eingang der Kombinieranordnung (24) ein bestimmtes Verhältnis haben. Um dieses Verhältnis automatisch einzustellen, ist der Kombinieranordnung eine Dämpfungsanordnung (26) vorgeschaltet, und dem Ausgang der Kombinieranordnung (24) ist ein Verstärker (22) mit zur Dämpfung der Dämpfungsanordnung inversen Verstärkung eingefügt. Eine Steueranordnung vergleicht die Pegel der Signale auf der Eingangsleitung (10) und am Eingang der Kombinieranordnung (24) und stellt die Dämpfung der Dämpfungsanordnung und die Verstärkung des Verstärkers entsprechend ein. Um für einen möglichst großen Bereich von akustischen Verhältnissen diese Einstellung zu ermöglichen, ist ferner dem adaptiven Filter (34) eine weitere Dämpfungsanordnung (36) vorgeschaltet, die ebenfalls von der Steueranordnung (40) gesteuert wird.

## Beschreibung

Die Erfindung betrifft ein Verfahren zur Echokompensation bei einer Vollduplex-Verbindung, wobei das vom Mikrofon aufgenommene Lautsprechersignal durch ein adaptives Filter kompensiert wird, sowie eine Anordnung zur Echokompensation mit einem adaptiven Filter.

Ein derartiges Verfahren sowie eine entsprechende Anordnung ist beispielsweise bekannt aus EP 0 301 627 B1. Darin wird eine Struktur eines adaptiven Filters beschrieben, das nahezu verzögerungsfrei arbeitet. Die Einstellung der Koeffizienten des adaptiven Filters kann nur während solcher Zeitabschnitte erfolgen, während denen an dieser Stelle nicht gesprochen wird, so daß dann vom Mikrofon nur das Echosignal aufgenommen wird, das vom adaptiven Filter möglichst exakt kompensiert wird.

Für eine gute Funktion des adaptiven Filters ist es wesentlich, daß die Pegel der Signale am Eingang des adaptiven Filters und der Kombinieranordnung, d.h. der Summieranordnung, ein bestimmtes Verhältnis zueinander haben. Dies wird allgemein dadurch erzielt, daß dem Lautsprecher ein Verstärker vorgeschaltet und dem Mikrofon ein Verstärker nachgeschaltet ist und die Verstärkung beider Verstärker so eingestellt wird, daß das Verhältnis der Pegel der beiden Signale einen vorgegebenen Wert hat. Dieser Pegel hängt jedoch von der räumlichen Anordnung von Lautsprecher zum Mikrofon und der Umgebung ab, und die Einstellung muß bei jedem Ortswechsel erneut durchgeführt werden.

Aufgabe der Erfindung ist es, ein Verfahren bzw. eine Anordnung zur Echokompensation bei einer Vollduplex-Verbindung anzugeben, mit der eine weitgehend automatische Einstellung des Verhältnisses der Pegel des Signals am Eingang des adaptiven Filters und des vom Mikrofon für das Kombinieren erzeugten Signals möglich ist. Diese Aufgabe wird durch das im Anspruch 1 angegebene Verfahren bzw. durch die im Anspruch 4 angegebene Anordnung gelöst.

Durch die einstellbare Dämpfung des Mikrofonsignals vor dem Kombinieren wird erreicht, daß unabhängig von Lautsprecherverstärker und Mikrofonverstärker und der Aufstellung von Lautsprecher zu Mikrofon das gewünschte Verhältnis der Signalpegel eingestellt wird, wobei das vom Mikrofon erzeugte Signal auf der Sendeleitung unabhängig von dieser Einstellung ist, da die Dämpfung des Mikrofonsignals vor der Sendeleitung wieder rückgängig gemacht wird.

Ausgestaltungen der Erfindung sind in den Unteransprüchen gekennzeichnet. Die Erfindung wirkt sich auch besonders günstig dann aus, wenn die Verstärkung des dem Lautsprecher vorgeschalteten Verstärkers geändert wird, beispielsweise um die Gegenstation der Verbindung besser verstehen zu können, denn dann kann die zusätzliche Dämpfung automatisch entsprechend entgegengesetzt geändert werden. Da diese veränderte Dämpfung ebenfalls rückgängig gemacht wird, bleibt das Signal auf der Sendeleitung bezüglich des Mikrofonsignals dennoch konstant. Dies gilt grundsätzlich auch bei einer Änderung der Verstärkung des Mikrofonverstärkers.

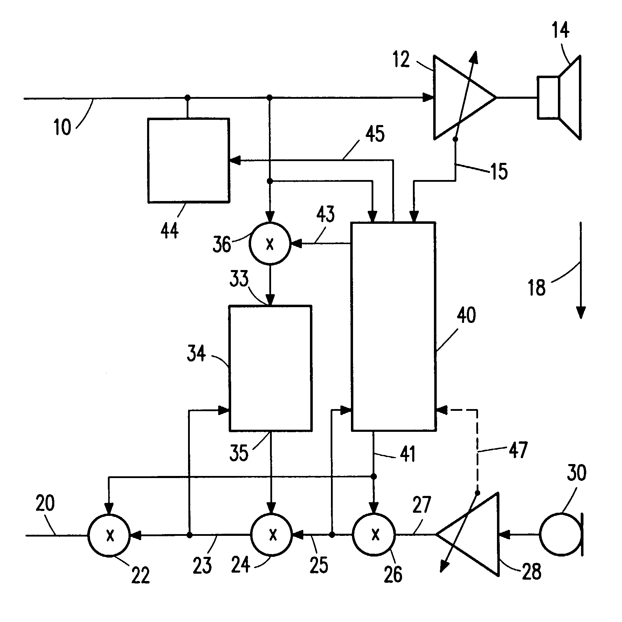

Ein Ausführungsbeispiel der Erfindung wird anhand der Zeichnung näher erläutert. Darin ist eine Eingangsleitung 10 einer Vollduplex-Verbindung mit einem Verstärker 12 verbunden, dessen Ausgang an einen Lautsprecher 14 angeschlossen ist.

Das vom Lautsprecher ausgesandte akustische Signal gelangt über den akustischen Echopfad 18 auf ein Mikrofon 30, das außerdem die an dieser Stelle erzeugten akustischen Sprachsignale und Geräusche aufnimmt, und das vom Mikrofon 30 erzeugte Mikrofonsignal wird über einen Verstärker 28, eine erste Dämpfungsanordnung 26, eine Kombinieranordnung 24 und eine Verstärkungsanordnung 22 der Sendeleitung 20 zugeführt.

Das Ausgangssignal der Kombinieranordnung 24 auf der Leitung 23 wird außerdem einem adaptiven Filter 34 zugeführt, das am Eingang 33 das auf der Eingangsleitung 10 vorhandene Signal empfängt, und zwar über eine zweite Dämpfungsanordnung 36, deren Funktion später erläutert wird. Das adaptive Filter 34 erzeugt am Ausgang 35 ein gefiltertes Signal, das für den Fall, daß das Mikrofon 30 nur das über den Echopfad 18 kommende akustische Signal aufnimmt, entgegengesetzt zu dem Signal auf der Leitung 25 ist, so daß das Ausgangssignal der Kombinieranordnung 24 auf der Leitung 23 im wesentlichen Null ist. Dadurch wird auch dann, wenn das Mikrofon 30 zusätzliche Sprachsignale an dieser Stelle aufnimmt, der vom Echopfad 18 herrührende Anteil im Mikrofon immer gerade ausgelöscht.

Für eine gute Funktion des adaptiven Filters sollte der Pegel des Signals auf der Leitung 25 um 6 dB unter dem Pegel des Signals auf der Eingangsleitung 10 liegen. Dies wird bei der dargestellten Anordnung auf folgende Weise erreicht.

Die Dämpfungsanordnung 26 und die Verstärkungsanordnung 22 weisen jede einen Steuereingang auf, der über eine Leitung 41 mit einer Steueranordnung 40 verbunden ist. Über die Leitung 41 wird die Dämpfung der Dämpfungsanordnung 26 und die Verstärkung der Verstärkungsanordnung 22 eingestellt, und zwar derart, daß die Verstärkung invers zu der Dämpfung ist, so daß die Wirkung der Dämpfungsanordnung 26 und der Verstärkungsanordnung 22 sich aufheben. Die Steueranordnung 40 empfängt das Signal am Ausgang der Dämpfungsanordnung 26 über die Leitung 25 und außerdem das Signal auf der Eingangsleitung 10 und bildet das Verhältnis der Pegel dieser beiden Signale zueinander. Zu einem bestimmten Zeitpunkt, beispielsweise ausgelöst durch ein Signal von einem Bediener, steuert die Steueranordnung 40 über eine Leitung 45 einen Signalgenerator 44, beispielsweise einen Rauschgenerator an, der ein Signal auf der Eingangsleitung 10 erzeugt. Dieses Signal wird der Steueranordnung 40 zugeführt, und über die Leitung 25 erhält die Steueranordnung das über den Lautsprecher 14, den Echopfad 18 und das Mikrofon 30 daraus erzeugte Signal und verändert daraufhin über die Leitung 41 die Dämpfung der Dämpfungsanordnung 26, bis die Pegel der Signale auf den Leitungen 10 und 25 das vorgegebene Verhältnis von 6 dB haben. Dieses ist dann unabhängig von der Einstellung der Verstärkung des Verstärkers 12 für den Lautsprecher 14 und des Verstärkers 28 für das Mikrofon 30. Dabei wird jedoch vorausgesetzt, daß während dieses Einstellvorgangs keine anderen Geräusche oder Sprachsignale auf das Mikrofon 30 gelangen.

Der Verstärker 12 für den Lautsprecher 14 hat allgemein eine einstellbare Verstärkung, um die Wiedergabelautstärke an die örtlichen Bedürfnisse anpassen zu können. Wenn nun nach der Einstellung die Verstärkung des Verstärkers 12 verändert wird, wird diese Veränderung über die Leitung 15 auch der Steueranordnung 40 zugeführt, und diese verändert in entgegengesetztem Sinn die Dämpfung der Dämpfungsanordnung 26. Wenn beispielsweise die Verstärkung des Verstärkers 12 um 3 dB erhöht wird, wird auch die Dämpfung der Dämpfungsanordnung 26 um 3 dB erhöht, so daß damit das Verhältnis der Pegel der Signale auf den Leitungen 10 und 25 wieder konstant bleibt. Dadurch, daß die Dämpfung der Dämpfungsanordnung 26 stets durch eine entsprechende Verstärkung der Verstärkungsanordnung 22 ausgeglichen wird, bleibt das Verhältnis der Pegel der Signale auf der Sendeleitung 20 und der Leitung 27 am Ausgang des Mikrofonverstärkers 28 konstant.

Bei dem beschriebenen Einstellvorgang ist es möglich, daß die Dämpfungsanordnung 26 gerade auf 0 dB eingestellt ist, um die beschriebenen Pegelverhältnisse zu erreichen. Wenn dann die Verstärkung des Verstärkers 12 verringert wird, müßte auch die Dämpfung der Dämpfungsanordnung 26 verringert werden, d.h. sie müßte nun als Verstärker arbeiten. Wenn dies vermieden werden soll, kann dem Eingang 33 des adaptiven Filters 34 eine Dämpfungsanordnung 36 vorgeschaltet werden, die dann, wenn die Dämpfung der Dämpfungsanordnung 26 über 0 dB verringert werden soll, statt dessen eine entsprechende Dämpfung des Signals auf der Eingangsleitung 10 für das adaptive Filter 34 erzeugt. Diese Dämpfung der Dämpfungsanordnung 36 wird von der Steueranordnung 40 über die Leitung 43 derart eingestellt, daß die Differenz der Dämpfungen der beiden Dämpfungsanordnungen 36 und 26 den von der Einstellung beim Einstellvorgang bestimmten Wert hat, ggf. durch eine Veränderung der Verstärkung des Verstärkers 12 über die Leitung 15 geändert, wobei zweckmäßig bei jeder Einstellung entweder die Dämpfungsanordnung 36 oder die Dämpfungsanordnung 26 oder beide die Dämpfung Null haben. Eine Änderung der Verstärkung des Verstärkers 12 ist für die Echounterdrückung gleichwertig mit einer Änderung der Verstärkung des Mikrofonverstärkers 28, so daß, wenn diese Verstärkung ebenfalls einstellbar ist, über die gestrichelt dargestellte Leitung der Steueranordnung 40 zugeführt wird und ebenfalls eine Änderung der Dämpfung der Dämpfungsanordnung 26 bzw. 36 bewirkt.

Es sei bemerkt, daß mehrere Teile der beschriebenen Anordnung, insbesondere die Steueranordnung 40, die Dämpfungsanordnungen 26 und 36 und die Verstärkeranordnung 22 sowie die Kombinieranordnung 24, ggf. auch die einstellbaren Verstärker 12 und 28 durch einen einzigen Signalprozessor realiviert werden können.

## Patentansprüche

1. Verfahren zur Echokompensation bei einer Vollduplex-Verbindung, wobei ein Eingangssignal über einen Lautsprecher akustisch wiedergegeben und gleichzeitig adaptiv gefiltert wird und ein akustisches Signal über ein Mikrofon in ein Mikrofonsignal umgesetzt und mit dem adaptiv gefilterten Signal zu einem Ausgangssignal kombiniert wird,
dadurch gekennzeichnet, daß das Mikrofonsignal vor dem Kombinieren um ein derartiges Maß gedämpft wird, daß das Verhältnis des Pegels des Eingangssignals zu dem Pegel des gedämpften Mikrofonsignals, das durch das Eingangssignal über den Lautsprecher und das Mikrofon erzeugt ist, einen vorgegebenen Wert hat, und daß die Dämpfung des Mikrofonsignals nach dem Kombinieren wieder rückgängig gemacht wird.

2. Verfahren nach Anspruch 1,
dadurch gekennzeichnet, daß das Eingangssignal vor Wiedergabe durch den Lautsprecher einstellbar verstärkt wird und daß bei einer Änderung der Verstärkung um ein bestimmtes Maß die Dämpfung des Mikrofonsignals um das gleiche Maß entgegengesetzt geändert wird.

3. Verfahren nach Anspruch 1 oder 2,
dadurch gekennzeichnet, daß das dem adaptiven Filter zugeführte Eingangssignal gedämpft wird und die Dämpfung des Eingangssignals und die Dämpfung des Mikrofonsignals derart eingestellt wird, daß das Verhältnis des Pegel des Eingangssignals und des Pegels des gedämpften Mikrofonsignals den vorgegebenen Wert hat.

4. Anordnung zur Echokompensation bei einer Vollduplex-Verbindung mit einer Empfangsleitung (10) und einer Sendeleitung (20), einem mit der Empfangsleitung gekoppelten Lautsprecher (14), einem Mikrofon (30), das mit einem ersten Eingang einer Kombinieranordnung (24) gekoppelt ist, dessen Ausgang mit der Sendeleitung (20) gekoppelt ist, einem adaptiven Filter (34) mit einem Eingang (33), der mit der Empfangsleitung (10) gekoppelt ist, und mit einem Ausgang (35), der mit einem zweiten Eingang der Kombinieranordnung (24) gekoppelt ist,
gekennzeichnet durch eine erste Dämpfungsanordnung (26) mit einstellbarer Dämpfung, die zwischen dem Mikrofon (30) und der Kombinieranordnung (24) angeordnet ist, eine der Kombinieranordnung (24) nachgeschaltete Verstärkungsanordnung (22) mit einer einstellbaren Verstärkung, die zur Dämpfung der ersten Dämpfungsanordnung (26) umgekehrt proportional ist, und eine Steueranordnung (40) zum Vergleichen des Pegels des Signals auf der Eingangsleitung (10) mit dem Pegel des am ersten Eingang der Kombinieranordnung (24) vorhandenen Signals und zum Einstellen der Dämpfung der ersten Dämpfungsanordnung (26) auf ein vorgegebenes Verhältnis der beiden genannten Pegel während eines vorgegebenen Zeitraums.

5. Anordnung nach Anspruch 4,
dadurch gekennzeichnet, daß dem Lautsprecher (14) eine zweite Verstärkungsanordnung (12) mit einstellbarer Verstärkung vorgeschaltet ist und daß die Steueranordnung (40) zum Ändern der Dämpfung der ersten Dämpfungsanordnung (26) invers zur Änderung der Verstärkung der zweiten Verstärkungsanordnung (12) außerhalb des vorgegebenen Zeitraums eingerichtet ist.

6. Anordnung nach Anspruch 4 oder 5,
dadurch gekennzeichnt, daß dem Eingang (33) des adaptiven Filters (34) eine zweite Dämpfungsanordnung (36) mit einstellbarer Dämpfung vorgeschaltet ist und daß die Steueranordnung (40) zum Einstellen der Dämpfungen der ersten Dämpfungsanordnung (26) und der zweiten Dämpfungsanordnung (36) auf das genannte vorgegebene Verhältnis der beiden Signalpegel eingerichtet ist.
